# EUROPEAN PATENT APPLICATION

(11) **EP 4 794 054 A1**
(43) Date of publication of application: **19.08.2026**
(21) Application number: 25863892.3
(22) Date of filing: 05.08.2025
(51) Int. Cl.: H01M 10/42, G01B 5/06

(54) **INSPECTION APPARATUS AND INSPECTION METHOD**

(30) Priority: 05.09.2024 KR 20240120628
(71) Applicant: LG Energy Solution, Ltd., Seoul 07335 (KR)
(72) Inventor: PARK, Jae Hong, Daejeon 34122 (KR); SHIN, Dong Seon, Daejeon 34122 (KR)
(74) Representative: Goddar, Heinz J.
(86) International application number: PCT/KR2025/011706
(87) International publication number: WO 2026/054342

(57) **Abstract**

Disclosed herein relates to an inspection device including: an inspection jig including a first jig having a plurality of first pressure sensing elements and a second jig having a plurality of second pressure sensing elements, wherein the inspection jig is configured to generate thickness data regarding the thickness of a battery cell provided between the first jig and the second jig while the battery cell is in contact with the first jig and the second jig; and a processor configured to detect the bending dimensions and bending shape of the battery cell based on first pressure data generated from the plurality of first pressure sensing elements, second pressure data generated from the plurality of second pressure sensing elements, and the thickness data.

## Description

### [Technical Field]

The present disclosure relates to an inspection device and an inspection method, and more specifically, to an inspection device and an inspection method configured to inspect battery cells.

This application claims the benefit of Korean Patent Application No. 10-2024-0120628, filed on September 5, 2024, the disclosure of which is incorporated herein by reference.

### [Background]

With the development of technology and increasing demand for mobile devices, the demand for secondary batteries is also rapidly increasing. Among these, lithium secondary batteries are widely used as energy sources for various mobile devices and electronic products due to their high energy density, high operating voltage, and excellent preservation and lifespan characteristics. Recently, as the application fields for secondary batteries have broadened, the demand for higher-capacity secondary batteries has surged. As demand for high-capacity secondary batteries increases, the length and width of the battery cells that make up secondary batteries are growing. This increase in cell dimensions is exacerbating bending defects in the battery cells.

### [Summary]

### [Technical Problem]

The technical problem that the technical concept of the present disclosure seeks to solve is to provide an inspection device and inspection method configured to inspect battery cells.

### [Technical Solution]

To solve the aforementioned problem, the technical concept of the present disclosure provides an inspection device including: an inspection jig including a first jig having a plurality of first pressure sensing elements and a second jig having a plurality of second pressure sensing elements, wherein the inspection jig is configured to generate thickness data regarding the thickness of a battery cell provided between the first jig and the second jig while the battery cell is in contact with the first jig and the second jig; and a processor configured to detect the bending dimensions and bending shape of the battery cell based on first pressure data generated from the plurality of first pressure sensing elements, second pressure data generated from the plurality of second pressure sensing elements, and the thickness data.

In exemplary embodiments, the plurality of first pressure sensing elements is each aligned with a corresponding one of the plurality of second pressure sensing elements.

In exemplary embodiments, the plurality of first pressure sensing elements is arranged in a two-dimensional array configuration, and the plurality of second pressure sensing elements is arranged in a two-dimensional array configuration.

In exemplary embodiments, the first jig includes: a first base plate; and a first surface pressure pad provided on a surface of the first base plate facing the second jig and comprising the plurality of first pressure sensing elements, wherein the second jig includes: a second base plate; and a second surface pressure pad provided on a surface of the second base plate facing the first jig and comprising the plurality of second pressure sensing elements.

In exemplary embodiments, the processor is configured to detect the bending dimension of the battery cell based on the reference thickness of the battery cell and the thickness of the battery cell detected on the inspection jig while the battery cell is pressed by the first load, wherein the reference thickness of the battery cell is the thickness of the battery cell measured while the battery cell is pressed with a second load greater than the first load.

In exemplary embodiments, the reference thickness of the battery cell is the thickness of the battery cell detected in the inspection jig while the battery cell is pressed with the second load in the inspection jig.

In exemplary embodiments, the inspection device further includes a thickness measuring device configured to measure the reference thickness of the battery cell.

In exemplary embodiments, the first load is between 1 kgf and 5 kgf.

In exemplary embodiments, the processor is further configured to detect the final bending dimension of the battery cell based on the difference between the bending dimension of the battery cell and the bending dimension of a normal battery cell.

To solve the aforementioned problem, the technical concept of the present disclosure provides an inspection method including: loading a battery cell onto an inspection jig including a first jig having a plurality of first pressure sensing elements and a second jig having a plurality of second pressure sensing elements; and detecting the bending dimensions and bending shape of the battery cell based on the first pressure data generated from the plurality of first pressure sensing elements, the second pressure data generated from the plurality of second pressure sensing elements, and thickness data regarding the thickness of the battery cell measured while the battery cell is in contact with the first jig and the second jig.

In exemplary embodiments, detecting the bending dimension of the battery cell includes: detecting the bending dimension of the battery cell based on the reference thickness of the battery cell and the thickness of the battery cell detected on the inspection jig while the battery cell is pressed with a first load; wherein the reference thickness of the battery cell is the thickness of the battery cell measured while the battery cell is pressed with a second load greater than the first load.

In exemplary embodiments, the reference thickness of the battery cell is the thickness of the battery cell detected in the inspection jig while the battery cell is pressed with the second load in the inspection jig.

In exemplary embodiments, the inspection method further includes detecting the final bending dimension of the battery cell based on the difference between the bending dimension of the battery cell and the bending dimension of a normal battery cell.

In exemplary embodiments, the first load is between 1 kgf and 5 kgf.

In exemplary embodiments, the plurality of first pressure sensing elements is arranged in a two-dimensional array configuration, the plurality of second pressure sensing elements is arranged in a two-dimensional array configuration, and the plurality of first pressure sensing elements is each aligned with a corresponding one of the plurality of second pressure sensing elements.

### [Advantageous Effects]

According to the inspection device of the exemplary embodiments, since the bending dimensions and bending shape of a battery cell can be detected to determine bending defects, the cost required for inspecting bending defects in the battery cell can be reduced.

According to the inspection device of the exemplary embodiments, since data on the bending dimensions and bending shape of the battery cell is generated to determine the bending defect of the battery cell, statistical process control for the bending of the battery cell is possible.

According to the inspection device of the exemplary embodiments, statistical process control of the bending of the battery cell can enhance the inspection reliability of the battery cell.

The effects that may be obtained from the exemplary embodiments of the present disclosure are not limited to those mentioned above, and other effects not mentioned may be clearly derived and understood by one of ordinary skill in the art to which the exemplary embodiments of the present disclosure belong from the following description. That is, unintended effects of practicing the exemplary embodiments of the present disclosure may also be derived from the exemplary embodiments of the present disclosure by one of ordinary skill in the art.

### [Brief Description of the Drawings]

FIGS. 1 through 3 are cross-sectional views showing inspection devices according to exemplary embodiments.
FIG. 4 is a schematic diagram showing an exemplary bending configuration of a battery cell.
FIG. 5 is a schematic diagram schematically showing the first surface pressure pad and the second surface pressure pad of the inspection jig according to the exemplary embodiments.
FIG. 6 is a flowchart illustrating an inspection method for inspecting the bending of a battery cell according to exemplary embodiments.
FIG. 7 is a flowchart illustrating a method for detecting the bending dimensions of a battery cell in an inspection method for inspecting the bending of a battery cell according to exemplary embodiments.
FIG. 8 is a table for explaining a method for determining the bending dimension in the inspection method for a battery cell according to exemplary embodiments.
FIG. 9 is a block diagram illustrating an inspection device according to exemplary embodiments.
FIG. 10 is a cross-sectional view showing a thickness measuring device of the inspection device according to exemplary embodiments.

### [Best Mode for Carrying out the Invention]

To solve the aforementioned problem, the technical concept of the present disclosure provides an inspection device including: an inspection jig including a first jig having a plurality of first pressure sensing elements and a second jig having a plurality of second pressure sensing elements, wherein the inspection jig is configured to generate thickness data regarding the thickness of a battery cell provided between the first jig and the second jig while the battery cell is in contact with the first jig and the second jig; and a processor configured to detect the bending dimensions and bending shape of the battery cell based on first pressure data generated from the plurality of first pressure sensing elements, second pressure data generated from the plurality of second pressure sensing elements, and the thickness data.

To solve the aforementioned problem, the technical concept of the present disclosure provides an inspection method including: loading a battery cell onto an inspection jig including a first jig having a plurality of first pressure sensing elements and a second jig having a plurality of second pressure sensing elements; and detecting the bending dimensions and bending shape of the battery cell based on the first pressure data generated from the plurality of first pressure sensing elements, the second pressure data generated from the plurality of second pressure sensing elements, and thickness data regarding the thickness of the battery cell measured while the battery cell is in contact with the first jig and the second jig.

### [Mode for Carrying out the Invention]

Hereinafter, preferred embodiments of the present disclosure will be described in detail with reference to the accompanying drawings. It should be noted that the terms and words used in this specification and claims are not to be construed in their ordinary or dictionary sense, but rather in a sense and concept consistent with the technical idea of the disclosure, based on the principle that the inventor may define the concept of a term as he sees fit to best describe his disclosure.

Accordingly, it is to be understood that the embodiments described herein and the configurations shown in the drawings are only the most preferred embodiments of the disclosure and are not exhaustive of the technical ideas of the disclosure, and that there may be various equivalents and modifications that may be substituted for them at the time of filing.

Furthermore, in describing the present disclosure, specific descriptions of related known configurations or features are omitted where it is deemed that such detailed description would obscure the essence of the disclosure.

Because the embodiments of the present disclosure are provided to more fully explain the disclosure to those of ordinary skill in the art, the shapes and sizes of components in the drawings may be exaggerated, omitted, or shown schematically for clarity. Accordingly, the size or proportion of each component is not necessarily indicative of its actual size or proportion.

### (First embodiment)

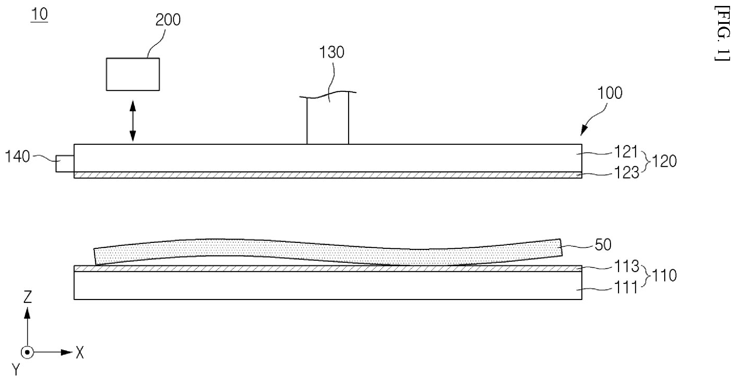

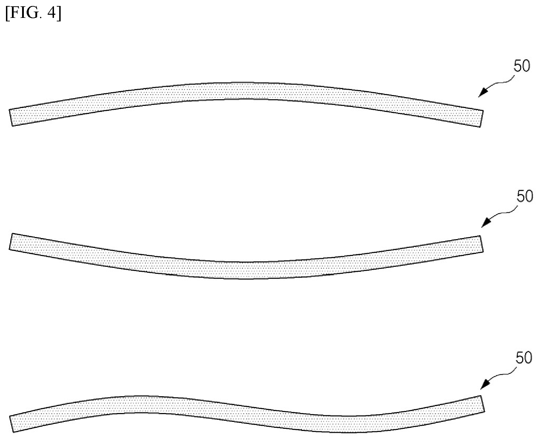

FIGS. 1 through 3 are cross-sectional views illustrating an inspection device 10 according to exemplary embodiments. FIG. 4 is a schematic diagram illustrating an exemplary bending configuration of a battery cell 50.

Referring to FIGS. 1 through 4, the inspection device 10 can inspect for bending defects in the battery cell 50. Bending of the battery cell 50 may constitute an appearance defect in the battery cell 50 after the activation process is completed. When bending occurs in the battery cell 50, the battery cell 50 assumes a curved state rather than a flat state. If bending occurs in the battery cell 50, there is a risk that the battery cell 50 may detach from the pick and place equipment during the pick and place facility, potentially causing yield reduction issues and safety concerns such as fire hazards.

As illustrated in FIG. 4, the bending form of the battery cell 50 may include a form where the center part of the battery cell 50 protrudes upward relative to both side parts of the battery cell 50, a form where the center part of the battery cell 50 protrudes downward relative to both side parts of the battery cell 50, and a form where the battery cell 50 is bent to have a wave-like shape with peaks and valleys.

The inspection device 10 may include an inspection jig 100 and a control part 200. FIGS. 1 through 3 illustrate a battery cell 50 with a wave-shaped bending loaded onto the inspection jig 100.

The inspection jig 100 may include a first jig 110, a second jig 120, a pressing mechanism 130, and a distance measuring device 140.

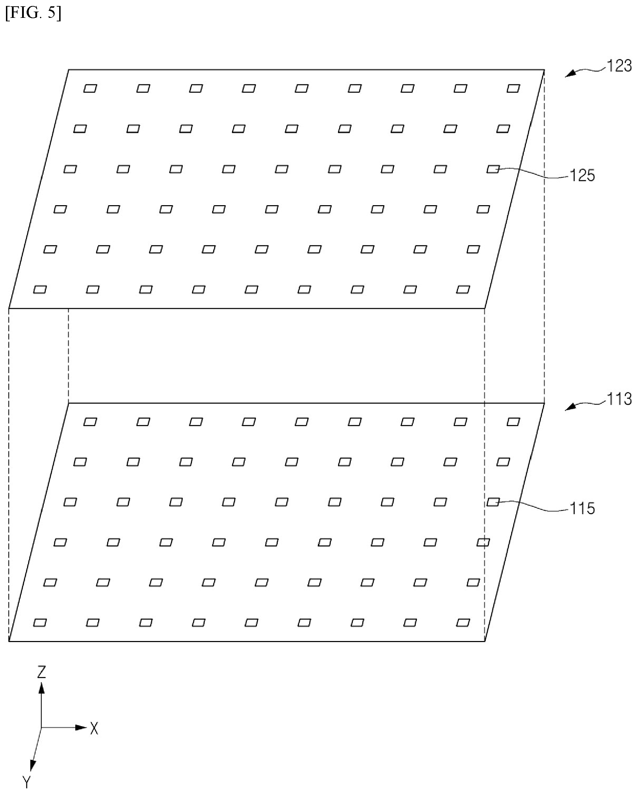

The first jig 110 can support the battery cell 50. The first jig 110 may include a first base plate 111 and a first surface pressure pad 113. The first surface pressure pad 113 may be attached to a surface of the first base plate 111 facing the second jig 120. The first surface pressure pad 113 may include a plurality of first pressure sensing elements (115 in FIG. 5). For example, each first pressure sensing element 115 may include a load cell. The first surface pressure pad 113 may generate first pressure data including pressure sensing values detected by the plurality of first pressure sensing elements 115.

At the first surface pressure pad 113 of the first jig 110, the first pressure sensing elements 115 within the contact areas of the first jig 110 in contact with the battery cell 50 may output pressure sensing values above a certain level, and while the remaining first pressure sensing elements 115 within the non-contact areas of the first jig 110 not in contact with the battery cell 50 can output pressure sensing values below a certain level. Based on the first pressure data output from the first surface pressure pads 113, the contact positions between the first jig 110 and the battery cell 50 can be identified.

A second jig 120 may be provided on top of the first jig 110. The second jig 120 may include a second base plate 121 and a second surface pressure pad 123. The second surface pressure pad 123 may be attached to the surface of the second base plate 121 facing the first jig 110. The second surface pressure pad 123 may include a plurality of second pressure sensing elements (125 in FIG. 5). For example, each second pressure sensing element 125 may include a load cell. The second surface pressure pad 123 may generate second pressure data including pressure sensing values detected by the plurality of second pressure sensing elements 125.

At the second surface pressure pad 123 of the second jig 120, the second pressure sensing elements 125 within the contact areas of the second jig 120 in contact with the battery cell 50 may output pressure sensing values above a certain level, while the remaining second pressure sensing elements 125 within the non-contact areas of the second jig 120 not in contact with the battery cell 50 can output pressure sensing values below a certain level. Based on the second pressure data output from the second surface pressure pads 123, the contact positions between the second jig 120 and the battery cell 50 can be identified.

In the inspection jig 100, at least one of the first jig 110 and the second jig 120 may be configured to move in a vertical direction (e.g., Z-axis direction). Movement of at least one of the first jig 110 and the second jig 120 can adjust the distance between the first jig 110 and the second jig 120 in the vertical direction (e.g., Z-axis direction).

The pressing mechanism 130 may be configured to move at least one of the first jig 110 and the second jig 120 in a vertical direction (e.g., Z-axis direction). The pressing mechanism 130 may include an actuator configured to move at least one of the first jig 110 and the second jig 120 in the vertical direction (e.g., Z-axis direction). The actuator may include a motor, a hydraulic cylinder, a pneumatic cylinder, or a combination thereof. The pressing mechanism 130 can pressurize the battery cell 50 provided between the first jig 110 and the second jig 120 by moving at least one of the first jig 110 and the second jig 120 in a vertical direction (e.g., Z-axis direction). For example, the pressing mechanism 130 may move the second jig 120 downward to press the battery cell 50 supported on the first jig 110. The pressing mechanism 130 may control the pressure or load applied to the battery cell 50.

A distance measuring device 140 may be configured to measure the distance between the first jig 110 and the second jig 120. The distance measuring device 140 may include a distance measuring sensor configured to detect the displacement distance of at least one of the first jig 110 and the second jig 120. The distance measuring sensor may include a displacement sensor, a speed sensor, an ultrasonic sensor, an infrared sensor, an encoder, or a combination thereof.

The inspection jig 100 can generate thickness data for the battery cell 50 while the battery cell 50 is in contact with both the first jig 110 and the second jig 120. The thickness data for the battery cell 50 may be a value generated by the distance measuring device 140 while the battery cell 50 is in contact with both the first jig 110 and the second jig 120, or a value generated by processing the value generated by the distance measuring device 140.

The inspection jig 100 may be configured to apply a bending inspection load to the battery cell 50 such that the battery cell 50 with bending does not deform into a flat state. When the inspection jig 100 presses the bent battery cell 50 with the bending inspection load, the battery cell 50 contacts both the first jig 110 and the second jig 120, yet the battery cell 50 can maintain its bent shape. Because the battery cell 50 maintains its bent shape, the first jig 110 may have a contact area in contact with the battery cell 50 and a non-contact area not in contact with the battery cell 50, and the second jig 120 may have a contact area in contact with the battery cell 50 and a non-contact area not in contact with the battery cell 50. When the inspection jig 100 presses the battery cell 50 with bending under a bending inspection load, the contact position between the first jig 110 and the battery cell 50 can be determined based on the first pressure data output from the first surface pressure pad 113, and the contact position between the second jig 120 and the battery cell 50 can be determined based on the second pressure data output from the second surface pressure pad 123.

When the inspection jig 100 presses the battery cell 50 with bending using the bending inspection load, the thickness of the battery cell 50 detected by the inspection jig 100 may be greater than the reference thickness of the battery cell 50. Here, the reference thickness of the battery cell 50 may be defined as the thickness of the battery cell 50 measured while the battery cell 50 is pressed with a reference thickness measurement load greater than the bending inspection load. When the battery cell 50 is pressed with the reference thickness measurement load, the battery cell 50 generally becomes flat, and the thickness of the battery cell 50 may generally be uniform.

In exemplary embodiments, the bending inspection load may be between 1 kgf and 5 kgf. In exemplary embodiments, the reference thickness measurement load may be between 50 kgf and 200 kgf.

In exemplary embodiments, the inspection jig 100 may be configured to pressurize the battery cell 50 with the reference thickness measurement load and to measure the reference thickness of the battery cell 50 pressurized with the reference thickness measurement load. In other exemplary embodiments, the reference thickness of the battery cell 50 may be measured by a separate thickness measuring device provided independently of the inspection jig 100.

The control part 200 may be connectable to the inspection jig 100 for signal transmission and may control the operation of the inspection jig 100. The control part 200 may include a computing device such as a workstation computer, desktop computer, laptop computer, or tablet computer. The control part 200 may include at least one memory device configured to store data and at least one processor configured to process data. The processor of the control part 200 may include any one of a simple controller, a complex processor such as a microprocessor, a CPU (Central Processing Unit), or a GPU (Graphics Processing Unit), a processor configured by software, dedicated hardware, and firmware. The processor may be instantiated by application-specific hardware, such as a DSP (Digital Signal Processor), an FPGA (Field Programmable Gate Array), or an ASIC (Application Specific Integrated Circuit).

The processor of the control part 200 may be configured to inspect the bending of the battery cell 50 based on data provided by the inspection jig 100. The processor may be configured to detect the bending dimensions and bending shape of the battery cell 50 based on data provided by the inspection jig 100. The bending dimension of the battery cell 50 indicates the level or amount of bending of the battery cell 50. For example, the bending dimension of the battery cell 50 may be the distance in the vertical direction (e.g., Z-axis direction) between the lowest point and the highest point on one surface of the battery cell 50. For example, the bending dimension of the battery cell 50 may correspond to the difference between the bending thickness of the battery cell 50 corresponding to the thickness T1 of the battery cell 50 measured on the inspection jig 100 while the battery cell 50 is pressed under the bending inspection load and the reference thickness of the battery cell 50.

The processor of the control part 200 may be configured to detect the bending dimensions and bending shape of the battery cell 50 based on the first pressure data output from the plurality of first pressure sensing elements 115, the second pressure data output from the plurality of second pressure sensing elements 125, and the thickness data of the battery cell 50 detected on the inspection jig 100 while the battery cell 50 is in contact with the first jig 110 and a second jig 120. The first pressure data, second pressure data, and thickness data used to detect the bending dimensions and bending shape of the battery cell 50 may be generated at the inspection jig 100 while the battery cell 50 is pressed by the bending inspection load at the inspection jig 100.

FIG. 5 is a schematic diagram illustrating the first surface pressure pad 113 and the second surface pressure pad 123 of the inspection jig 100 according to exemplary embodiments.

Referring to FIG. 5 together with FIG. 1, in the inspection jig 100, a plurality of first pressure sensing elements 115 of the first surface pressure pad 113 may be arranged in a regular pattern, and a plurality of second pressure sensing elements 125 of the second surface pressure pad 123 may be arranged in a regular pattern. The arrangement of the plurality of first pressure sensing elements 115 provided on the first surface pressure pad 113 may be substantially identical to the arrangement of the plurality of second pressure sensing elements 125 provided on the second surface pressure pad 123. In exemplary embodiments, the plurality of first pressure sensing elements 115 may be arranged in a first horizontal direction (e.g., X-axis direction) and/or a second horizontal direction (e.g., Y-axis direction), and the plurality of second pressure sensing elements 125 may be arranged in the first horizontal direction (e.g., X-axis direction) and/or the second horizontal direction (e.g., Y-axis direction). In exemplary embodiments, the plurality of first pressure sensing elements 115 may be arranged in a two-dimensional array configuration, and the plurality of second pressure sensing elements 125 may be arranged in a two-dimensional array configuration.

The plurality of first pressure sensing elements 115 may each be aligned in a vertical direction (e.g., Z-axis direction) with respect to a corresponding one of the plurality of second pressure sensing elements 125. Each first pressure sensing element 115 and each second pressure sensing element 125 may be aligned in a vertical direction (e.g., Z-axis direction) with respect to a corresponding inspection position among a plurality of inspection positions specified for the battery cell 50.

### (Second embodiment)

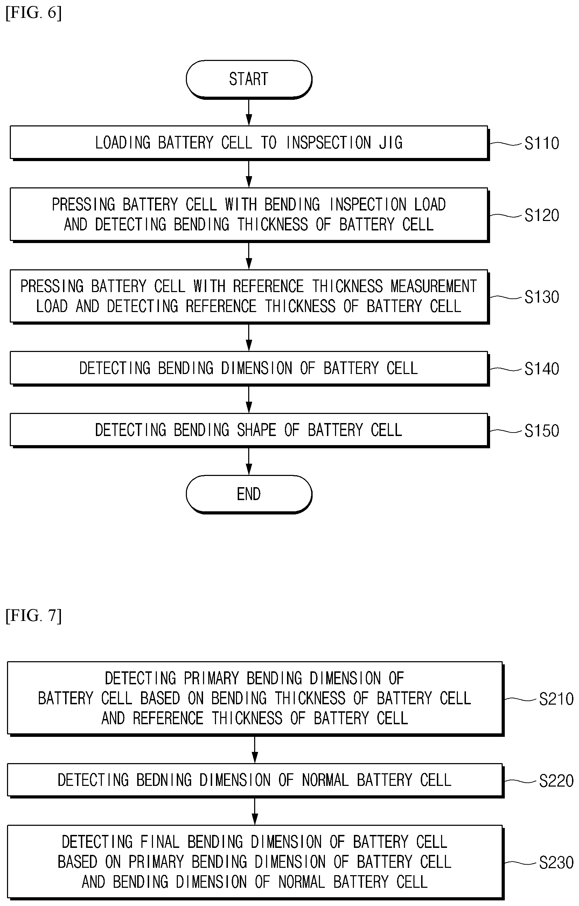

FIG. 6 is a flowchart illustrating an inspection method for inspecting bending of a battery cell 50 according to exemplary embodiments. Hereinafter, with reference to FIGS. 1 through 3 together with FIG. 6, the inspection method for inspecting bending of the battery cell 50 using the inspection device 10 will be described.

Referring to FIG. 1, a battery cell 50 is loaded onto an inspection jig 100 (S110). The battery cell 50 may be placed on the upper surface of a first jig 110 facing a second jig 120.

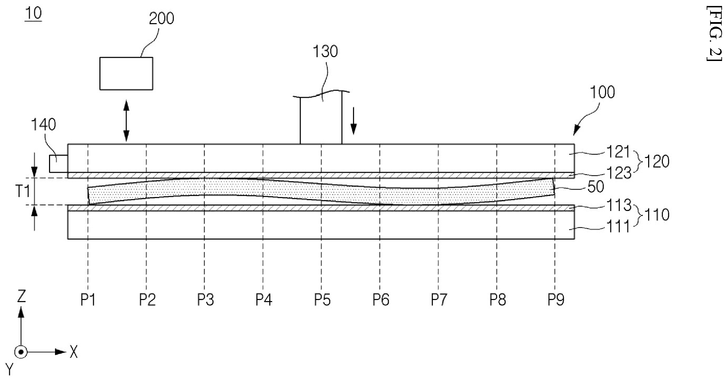

Referring to FIG. 2, after loading the battery cell 50 onto the inspection jig 100, the battery cell 50 is pressed with a bending inspection load, and the bending thickness of the battery cell 50 is detected (S120). The bending thickness of the battery cell 50 may correspond to the thickness T1 of the battery cell 50 measured while the battery cell 50 is pressed by the bending inspection load on the inspection jig 100.

In step S120, the pressing mechanism 130 moves the second jig 120 downward so that the second jig 120 contacts the battery cell 50, and presses the second jig 120 so that the battery cell 50 is pressed between the first jig 110 and the second jig 120 with the bending inspection load. While the battery cell 50 is pressed between the first jig 110 and the second jig 120 with the bending inspection load, the battery cell 50 can remain in a bent state without flattening. While the battery cell 50 is pressed between the first jig 110 and the second jig 120 with the bending inspection load, a portion of the bottom surface of the battery cell 50 may contact the first jig 110, and a portion of the upper surface of the battery cell 50 may contact the second jig 120. Based on the first pressure data output from the first pressure pad 113 and the second pressure data output from the second pressure pad 123, the contact positions between the first jig 110 and the battery cell 50 and the contact positions between the second jig 120 and the battery cell 50 can be identified. For example, the first jig 110 and the battery cell 50 can be determined to be in contact with each other at positions corresponding to the locations of the first pressure sensing elements 115 that output a pressure sensing value at or above a certain level, and the second jig 120 and the battery cell 50 can be determined to be in contact with each other at positions corresponding to the locations of the second pressure sensing elements 125 that output a pressure sensing value above a certain level.

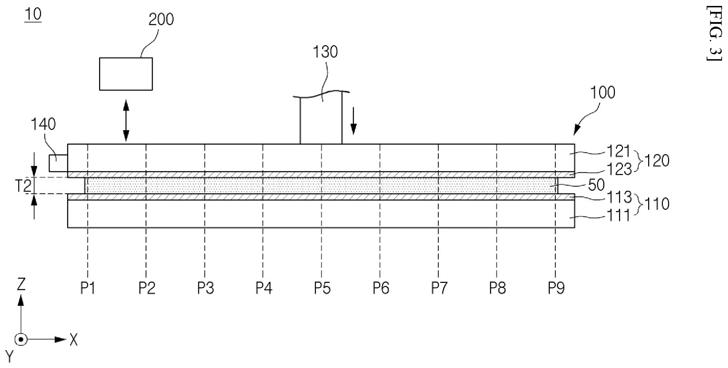

Referring to FIG. 3, the battery cell 50 is pressed with a load for measuring the reference thickness, and the reference thickness of the battery cell 50 is detected (S130). The reference thickness of the battery cell 50 may correspond to the thickness T2 of the battery cell 50 measured while the battery cell 50 is pressed by the reference thickness measurement load on the inspection jig 100.

In step S130, the pressing mechanism 130 moves the second jig 120 downward so that the second jig 120 contacts the battery cell 50, and may press the second jig 120 so that the battery cell 50 is pressed between the first jig 110 and the second jig 120 with a load for measuring the reference thickness. The battery cell 50, pressed by the reference thickness measurement load, can be deformed into a flat state, and the first jig 110 and second jig 120 can each contact the battery cell 50 at all inspection positions (P1 to P9) of the battery cell 50.

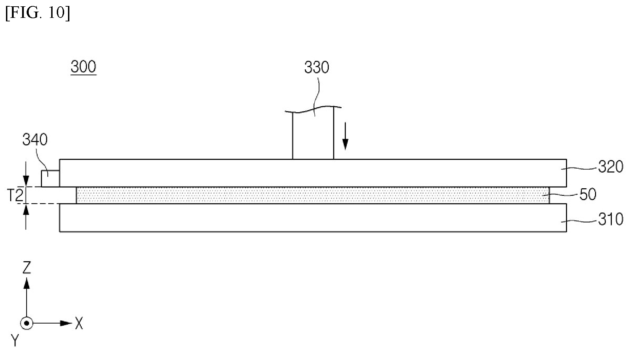

In exemplary embodiments, step S130 may be performed on a thickness measuring device (300 in FIG. 10) provided separately from the inspection jig 100.

Next, the bending dimension of the battery cell 50 is detected (S140). The bending dimension of the battery cell 50 can be determined based on the bending thickness of the battery cell 50 determined in step S120 and the reference thickness of the battery cell 50 determined in step S130. The bending dimension of the battery cell 50 can be determined as the value obtained by subtracting the reference thickness of the battery cell 50 determined in step S130 from the bending thickness of the battery cell 50 determined in step S120.

Next, the bending shape of the battery cell 50 is detected (S150). The bending shape of the battery cell 50 can be determined based on first pressure data generated from a plurality of first pressure sensing elements 115, second pressure data generated from a plurality of second pressure sensing elements 125, and bending dimensions of the battery cell 50. The bending shape of the battery cell 50 is based on the contact locations between the first jig 110 and the battery cell 50 determined while the battery cell 50 is pressed with a bending inspection load in step S120, the contact locations between the second jig 120 and the battery cell 50 determined while the battery cell 50 is pressed with a bending inspection load in step S120, detecting coordinates on the surface of the battery cell 50 based on the bending dimensions of the battery cell 50 determined in step S140, and modeling the battery cell 50 in a three-dimensional form based on the coordinates of the surface of the detected battery cell 50. For example, the bending shape of the battery cell 50 may be determined as a shape where the center part of the battery cell 50 protrudes upward relative to both side parts of the battery cell 50, a shape where the center part of the battery cell 50 protrudes downward relative to both side parts of the battery cell 50, or a shape where the battery cell 50 is bent to have a wave-like shape with ridges and valleys.

### (Third embodiment)

FIG. 7 is a flowchart illustrating a method for detecting the bending dimensions of a battery cell 50 in an inspection method for inspecting the bending of the battery cell 50 according to exemplary embodiments. Hereinafter, with reference to FIGS. 1 to 3, FIG. 6, and FIG. 7, a method for detecting the bending dimension of the battery cell 50 using the inspection device 10 will be described, omitting or briefly describing explanations overlapping with those previously described.

Referring to FIG. 7, a primary bending dimension of the battery cell 50 is detected S210 based on the bending thickness of the battery cell 50 and the reference thickness of the battery cell 50. In step S210, the bending thickness of the battery cell 50 can be detected through steps substantially identical to those in step S120 of FIG. 6, and the reference thickness of the battery cell 50 can be detected through steps substantially identical to those in step S130 of FIG. 6. The value obtained by subtracting the reference thickness of the battery cell 50 from the bending thickness of the battery cell 50 can be determined as the primary bending dimension of the battery cell 50.

Next, the bending dimension of the normal battery cell is detected (S220). The normal battery cell may refer to a battery cell in its original flat state without bending. The bending dimension of the normal battery cell can be determined through a process substantially identical to steps S110, S120, S130, and S140 described with reference to FIG. 6. Step S220 includes loading the normal battery cell onto the inspection jig 100, detecting the bending thickness of the normal battery cell while applying a bending inspection load to the normal battery cell loaded on the inspection jig 100, detecting the reference thickness of the normal battery cell while applying a reference thickness measurement load to the battery cell 50, and detecting the bending dimension of the normal battery cell. The bending dimension of the normal battery cell can be determined as the value obtained by subtracting the reference thickness of the normal battery cell from the bending thickness of the normal battery cell.

Next, based on the primary bending dimension of the battery cell 50 and the bending dimension of the normal battery cell, the final bending dimension of the battery cell 50 is detected S230. Step S230 may be a step of correcting the result obtained by inspecting the bent battery cell 50 using the result obtained from the normal battery cell without bending. Through step S230, errors arising from equipment such as the inspection jig 100 can be eliminated. The final bending dimension of the battery cell 50 may be determined as the value obtained by subtracting the bending dimension of the normal battery cell determined in step S220 from the primary bending dimension of the battery cell 50 determined in step S210.

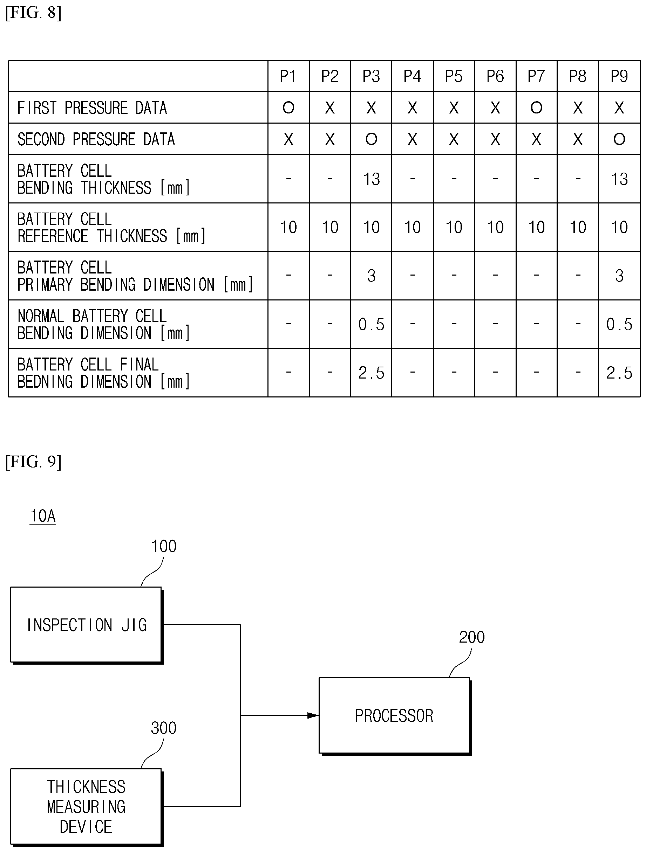

FIG. 8 is a table illustrating an inspection method for a battery cell 50 according to exemplary embodiments. Hereinafter, with reference to FIGS. 1 to 3 and FIGS. 6 to 8, an exemplary inspection method for a battery cell 50 having wave-shaped bending is described.

Referring to FIG. 2, after applying a bending inspection load to the battery cell 50, first pressure data and second pressure data are generated. Based on pressure sensing values sensed by a plurality of first pressure sensing elements 115 placed at a plurality of inspection positions (P1 to P9), contact positions between the first jig 110 and the battery cell 50 can be detected. And based on the pressure sensing values sensed by a plurality of second pressure sensing elements 125 placed at a plurality of inspection positions (P1 to P9), the contact positions between the second jig 120 and the battery cell 50 can be detected.

In the table of FIG. 8, the first pressure data is simply depicted as "O" or "X" based on whether contact exists between the first jig 110 and the battery cell 50. However, the first pressure data may include pressure sensing values output from a plurality of first pressure sensing elements 115. Similarly, the second pressure data was simply depicted as "O" or "X" based on whether contact existed between the second jig 120 and the battery cell 50. However, the second pressure data may include pressure sensing values output from a plurality of first pressure sensing elements 115. For example, if the pressure sensing value output from the first pressure sensing element 115 is above a certain value, contact between the first jig 110 and the battery cell 50 is determined to have occurred and is indicated as "O", and when the pressure sensing value output from the first pressure sensing element 115 is below a certain value, it is determined that no contact has occurred between the first jig 110 and the battery cell 50, and it is marked as "X". Similarly, if the pressure sensing value output from the second pressure sensing element 125 is equal to or greater than a predetermined value, contact between the second jig 120 and the battery cell 50 is determined to have occurred and is indicated as "O". When the pressure sensing value output from the second pressure sensing element 125 is below a certain value, it is determined that no contact has occurred between the second jig 120 and the battery cell 50, and it is marked as "X".

Next, the bending thickness of the battery cell 50 is detected while the battery cell 50 is pressed under the bending inspection load. The bending thickness of the battery cell 50 may correspond to the thickness T1 of the battery cell 50 measured on the inspection jig 100 while the battery cell 50 is pressed by the bending inspection load, and may be assigned to the contact positions (P3, P9) between the second jig 120 and the battery cell 50.

Referring to FIG. 3, after detecting the bending thickness of the battery cell 50 while pressing the battery cell 50 with the bending inspection load, the reference thickness of the battery cell 50 is detected while pressing the battery cell 50 with the reference thickness measurement load. The battery cell 50 pressed by the reference thickness measurement load can be deformed to have a uniform thickness. The reference thickness of the battery cell 50 can be the thickness T2 of the battery cell 50 measured on the inspection jig 100 while the battery cell 50 is pressed by the reference thickness measurement load. Alternatively, the reference thickness of the battery cell 50 may be the thickness of the battery cell 50 measured by a thickness measuring device (300 in FIG. 10) provided separately from the inspection jig 100.

Next, the primary bending dimension of the battery cell 50 is determined based on the bending thickness and the reference thickness of the battery cell 50. The primary bending dimension of the battery cell 50 may be determined as the value obtained by subtracting the reference thickness of the battery cell 50 from the bending thickness of the battery cell 50. For example, the primary bending dimension of the battery cell 50 can be assigned based on the contact positions (P3, P9) between the second jig 120 and the battery cell 50 while the battery cell 50 is pressed with the bending inspection load, and the primary bending dimension of the battery cell 50 can be determined as 3 mm, which is the difference between 13 mm (corresponding to the bending thickness of the battery cell 50) and 10 mm (corresponding to the reference thickness of the battery cell 50).

Next, the final bending dimension of the battery cell 50 is determined based on the primary bending dimension of the battery cell 50 and the bending dimension of the normal battery cell. The final bending dimension of the battery cell 50 can be determined as the value obtained by subtracting the bending dimension of the normal battery cell from the primary bending dimension of the battery cell 50. For example, the final bending dimension of the battery cell 50 may be determined as 2.5mm, corresponding to the difference between the primary bending dimension of the battery cell 50 of 3mm and the bending dimension of the normal battery cell of 0.5mm.

Next, the bending shape of the battery cell 50 is detected. Detecting the bending shape of the battery cell 50 may include modeling the shape of the battery cell 50 as a three-dimensional shape or a 3D shape. The bending shape of the battery cell 50 is determined based on the contact positions between the first jig 110 and the battery cell 50 while the battery cell 50 is pressed by the bending inspection load, the contact positions between the second jig 120 and the battery cell 50 determined while the battery cell 50 is pressed with the bending inspection load, and the final bending dimensions of the battery cell 50.

For example, the spatial coordinates of one surface of the battery cell 50 at the contact positions (P1, P7) between the first jig 110 and the battery cell 50 detected while the battery cell 50 is pressed by the bending inspection load have a Z-axis value corresponding to the reference thickness of the battery cell 50. And the spatial coordinates of one surface of the battery cell 50 at the contact positions (P3, P9) detected between the second jig 120 and the battery cell 50 while the battery cell 50 is pressed by the bending inspection load may have Z-axis values corresponding to the final bending dimensions of the battery cell 50. Based on the spatial coordinates of the battery cell 50 acquired at the contact positions (P1, P7) between the first jig 110 and the battery cell 50 detected while the battery cell 50 is pressed by the bending inspection load, and the spatial coordinates of the battery cell 50 acquired at the contact positions (P3, P9) between the second jig 120 and the battery cell 50 detected while the battery cell 50 is pressed by the bending inspection load, one surface of the battery cell 50 can be modeled in three-dimensional form.

Next, based on the bending dimensions and bending shape of the battery cell 50, it is possible to determine whether the battery cell 50 has a bending defect. For example, if the bending dimensions of the battery cell 50 are within the normal dimensions, the battery cell 50 can be judged as normal. If the bending dimensions of the battery cell 50 exceed the normal dimensions, the battery cell 50 can be judged as defective. The normal dimensions of the battery cell 50 can be determined based on the bending shape of the battery cell 50. For example, the normal dimension for a battery cell 50 with a wave-shaped bend may be determined to be 2 mm. In this case, if the final bending dimension of the battery cell 50 is detected as 2.5 mm, that battery cell 50 may be finally judged as defective due to bending.

### (Fourth embodiment)

FIG. 9 is a block diagram illustrating an inspection device 10A according to exemplary embodiments. FIG. 10 is a cross-sectional view illustrating a thickness measuring device 300 of the inspection device 10A according to exemplary embodiments. Hereinafter, the inspection device 10A of FIGS. 9 and 10 will be described, focusing on the differences from the inspection device 10 described with reference to FIGS. 1 to 3.

Referring to FIGS. 9 and 10, the inspection device 10A may further include a thickness measuring device 300. The thickness measuring device 300 may include a first jig 310, a second jig 320, a pressing mechanism 330, and a distance measuring device 340. The thickness measuring device 300 may be generally identical or similar to the inspection jig 100, except that the first jig 310 does not provide a first surface pressure pad 113 and the second jig 320 does not provide a second surface pressure pad 123.

The first jig 310 can support the battery cell 50, and the second jig 320 can be provided on top of the battery cell 50. At least one of the first jig 310 and the second jig 320 can be configured to move in a vertical direction (e.g., Z-axis direction). A pressing mechanism 330 can move at least one of the first jig 310 and the second jig 320 in a vertical direction (e.g., Z-axis direction) to apply pressure to the battery cell 50 provided between the first jig 310 and the second jig 320. The pressing mechanism 330 can adjust the pressure or load applied to the battery cell 50. The distance measuring device 340 can be configured to measure the distance between the first jig 310 and the second jig 320. The thickness measuring device 300 may generate thickness data regarding the thickness of the battery cell 50 while the battery cell 50 contacts both the first jig 310 and the second jig 320. The thickness data for the thickness of the battery cell 50 may be a value generated by the distance measuring device 340 while the battery cell 50 is in contact with both the first jig 310 and the second jig 320, or a value generated by processing the value generated by the distance measuring device 340.

The thickness measuring device 300 may be configured to detect a reference thickness of the battery cell 50 while pressing the battery cell 50 with a reference thickness measurement load, and may be configured to provide the reference thickness of the battery cell 50 to the inspection jig 100. The inspection jig 100 may be configured to detect the bending dimensions of the battery cell 50 based on the reference thickness of the battery cell 50 provided by the thickness measuring device 300.

Generally, bending defects in battery cells are inspected through visual inspection or manual work by an operator.

According to the inspection device of the exemplary embodiments, since the bending dimensions and bending shape of the battery cell can be detected to determine the bending defect of the battery cell, the cost required for inspecting the bending defect of the battery cell can be reduced.

According to the inspection device of the exemplary embodiments, since data on the bending dimensions and bending shape of the battery cell is generated to determine the bending defect of the battery cell, statistical process control for the bending of the battery cell is possible.

According to the inspection device of the exemplary embodiments, statistical process control of the bending of the battery cell can enhance the inspection reliability of the battery cell.

The present disclosure has been described in more detail above with reference to the drawings and embodiments. However, it is to be understood that the configurations shown in the drawings or embodiments described herein are only one embodiment of the disclosure and do not represent all of the technical ideas of the disclosure, and that there may be various equivalents and modifications that may be substituted for them at the time of filing the present application.

## Claims

1. An inspection device comprising:
an inspection jig comprising a first jig having a plurality of first pressure sensing elements and a second jig having a plurality of second pressure sensing elements, wherein the inspection jig is configured to generate thickness data regarding the thickness of a battery cell provided between the first jig and the second jig while the battery cell is in contact with the first jig and the second jig; and
a processor configured to detect the bending dimensions and bending shape of the battery cell based on first pressure data generated from the plurality of first pressure sensing elements, second pressure data generated from the plurality of second pressure sensing elements, and the thickness data.

2. The inspection device of claim 1, wherein
the plurality of first pressure sensing elements is each aligned with a corresponding one of the plurality of second pressure sensing elements.

3. The inspection device of claim 2, wherein
the plurality of first pressure sensing elements is arranged in a two-dimensional array configuration, and
the plurality of second pressure sensing elements is arranged in a two-dimensional array configuration.

4. The inspection device of claim 1, wherein
the first jig comprises:
a first base plate; and
a first surface pressure pad provided on a surface of the first base plate facing the second jig and comprising the plurality of first pressure sensing elements, wherein
the second jig comprises:
a second base plate; and
a second surface pressure pad provided on a surface of the second base plate facing the first jig and comprising the plurality of second pressure sensing elements.

5. The inspection device of claim 1, wherein
the processor is configured to detect the bending dimension of the battery cell based on the reference thickness of the battery cell and the thickness of the battery cell detected on the inspection jig while the battery cell is pressed by the first load, wherein
the reference thickness of the battery cell is the thickness of the battery cell measured while the battery cell is pressed with a second load greater than the first load.

6. The inspection device of claim 5, wherein
the reference thickness of the battery cell is the thickness of the battery cell detected in the inspection jig while the battery cell is pressed with the second load in the inspection jig.

7. The inspection device of claim 5, further comprising:
a thickness measuring device configured to measure the reference thickness of the battery cell.

8. The inspection device of claim 5, wherein
the first load is between 1 kgf and 5 kgf.

9. The inspection device of claim 5, wherein
the processor is further configured to detect the final bending dimension of the battery cell based on the difference between the bending dimension of the battery cell and the bending dimension of a normal battery cell.

10. An inspection method comprising:
loading a battery cell onto an inspection jig comprising a first jig having a plurality of first pressure sensing elements and a second jig having a plurality of second pressure sensing elements; and
detecting the bending dimensions and bending shape of the battery cell based on the first pressure data generated from the plurality of first pressure sensing elements, the second pressure data generated from the plurality of second pressure sensing elements, and thickness data regarding the thickness of the battery cell measured while the battery cell is in contact with the first jig and the second jig.

11. The inspection method of claim 10, wherein
detecting the bending dimension of the battery cell comprises:
detecting the bending dimension of the battery cell based on the reference thickness of the battery cell and the thickness of the battery cell detected on the inspection jig while the battery cell is pressed with a first load; wherein
the reference thickness of the battery cell is the thickness of the battery cell measured while the battery cell is pressed with a second load greater than the first load.

12. The inspection method of claim 11, wherein
the reference thickness of the battery cell is the thickness of the battery cell detected in the inspection jig while the battery cell is pressed with the second load in the inspection jig.

13. The inspection method of claim 11, further comprising:
detecting the final bending dimension of the battery cell based on the difference between the bending dimension of the battery cell and the bending dimension of a normal battery cell.

14. The inspection method of claim 11, wherein
the first load is between 1 kgf and 5 kgf.

15. The inspection method of claim 10, wherein
the plurality of first pressure sensing elements is arranged in a two-dimensional array configuration,
the plurality of second pressure sensing elements is arranged in a two-dimensional array configuration, and
the plurality of first pressure sensing elements is each aligned with a corresponding one of the plurality of second pressure sensing elements.
